# EUROPEAN PATENT APPLICATION

(11) **EP 2 012 285 A2**
(43) Date of publication of application: **07.01.2009**
(21) Application number: 08104625.2
(22) Date of filing: 03.07.2008
(51) Int. Cl.: G08B 21/06

(54) **Apparatus, method and program for detecting act of looking aside**

(30) Priority: 04.07.2007 JP 2007175779
(71) Applicant: Omron Corporation, Kyoto-shi, Kyoto 600-8530 (JP)
(72) Inventor: MATSUOKA, Miki, Kyoto Kyoto 600-8530 (JP)
(74) Representative: Brykman, Georges

(57) **Abstract**

More accurate detection of an act of looking aside is to be achieved. A direction-of-face detection unit detects the orientation of face of a driver, and a direction-of-sight line detection unit detects the sight line orientation of the driver, based on an image photographed by a photographing unit. A judging unit judges whether or not the driver is looking aside, based on the face orientation of the driver. When the judging unit judges that the driver is not looking aside, a judging unit judges whether or not the driver is looking aside based on the sight line orientation of the driver. The invention is applicable to an apparatus for detecting an act of looking aside by a driver.

## Description

### BACKGROUND OF THE INVENTION

### 1. Field of the Invention

The present invention relates to an apparatus, a method and a program for detecting the act of looking aside. Particularly, it relates to an apparatus, a method and a program for detecting the act of looking aside, which enable more accurate detection of the act of looking aside.

### 2. Description of Related Art

In recent years, accidents occur frequently because drivers look aside while driving. Therefore, a technique to detect the act of looking aside by a driver and issue a warning against the act of looking aside has been developed.

For instance, a technique has been proposed, which includes: setting, based on the angle of the orientation of the face or sight line of a driver, a time during which the act of looking aside is allowed; and issuing a warning against the act of looking aside at the time when the condition that a driver remains looking aside continues beyond the set time (see e.g. JP-A-3-167698 (Patent Document 1)).

Further, for instance, a technique has been proposed, which includes: detecting the act of looking aside based on the orientation of the face or sight line of a driver; and judging whether or not to issue a warning against the act of looking aside based on a wheel rudder angle, the shift position of a car or the speed thereof (see e.g. JP-A-6-243367 (Patent Document 2)).

However, in the inventions disclosed in Patent Documents 1 and 2, no consideration is taken into account about the relation between the orientations of driver's face and sight line in detection of the act of looking aside, and therefore there still remains a room for improvement to increase the detection accuracy of the act of looking aside.

### SUMMARY OF THE INVENTION

The invention was made in consideration of such circumstances, which aims to achieve more accurate detection of the act of looking aside.

An apparatus for detecting an act of looking aside according to an aspect of the invention includes: a face orientation detection means for detecting an orientation of face of a person; a first judging means for judging, based on the face orientation of the person, whether or not the person is looking aside; a direction-of-sight line detection means for detecting an orientation of sight line of the person; and a second judging means for judging, based on the sight line orientation of the person, whether or not the person is looking aside when it is judged based on the face orientation of the person that the person is not looking aside.

In the apparatus for detecting an act of looking aside according to an aspect of the invention, the orientation of face of a person is detected; it is judged based on the face orientation of the person whether or not the person is looking aside; the orientation of sight line of the person is detected; and when it is judged based on the face orientation of the person that the act of looking aside is not going on, it is judged based on the sight line orientation of the person whether or not the person is looking aside.

Thus, the act of looking aside can be detected more accurately.

The face orientation detection means, first judging means, direction-of-sight line detection means, and second judging means are constituted by e.g. a CPU (Central Processing Unit).

The first judging means can be arranged to adjust, according to the speed of the vehicle which the person is driving, the range of the face orientation making a reference to judge whether or not the act of looking aside is going on.

Thus, the act of looking aside can be detected more accurately.

The second judging means can be arranged to adjust, according to the speed of the vehicle which the person is driving, the range of the sight line orientation making a reference to judge whether or not the act of looking aside is going on.

Thus, the act of looking aside can be detected more accurately.

A method or program for detecting an act of looking aside according to an aspect of the invention includes: a face orientation detection step for detecting an orientation of face of a person; a first judging step for judging, based on the face orientation of the person, whether or not the person is looking aside; a direction-of-sight line detection step for detecting an orientation of sight line of the person; and a second judging step for judging, based on the sight line orientation of the person, whether or not the person is looking aside when it is judged based on the face orientation of the person that the person is not looking aside.

In the method or program for detecting an act of looking aside according to an aspect of the invention, the orientation of face of a person is detected; it is judged based on the face orientation of the person whether or not the person is looking aside; the orientation of sight line of the person is detected; and when it is judged based on the face orientation of the person that the person is not looking aside, it is judged based on the sight line orientation of the person whether or not the person is looking aside.

Thus, the act of looking aside can be detected more accurately.

The face orientation detection step is configured e.g. by a step of detecting the orientation of face of a person by means of CPU. The first judging step is configured e.g. by a step of judging, based on the face orientation of the person, whether or not the person is looking aside by means of CPU. The direction-of-sight line detection step is configured e.g. by a step of detecting the sight line orientation of the person by means of CPU. The second judging step is configured e.g. by a step of judging, based on the sight line orientation of the person whether or not the person is looking aside by means of CPU, when it is judged based on the face orientation of the person that the person is not looking aside.

As stated above, according to an aspect of the invention, the act of looking aside can be detected. Particularly, according to an aspect of the invention, the act of looking aside can be detected more accurately.

### BRIEF DESCRIPTION OF THE DRAWINGS

Fig. 1 is a block diagram showing an embodiment of a driving-support apparatus to which the invention is applied.
Fig. 2 is a flowchart for explaining driving-support processing executed by the driving-support apparatus.
Fig. 3 is an illustration for explaining an example of judgment of the act of looking aside.
Fig. 4 is an illustration for explaining an example of judgment of the act of looking aside.
Fig. 5 is an illustration for explaining an example of judgment of the act of looking aside.
Fig. 6 is a block diagram showing an example of the configuration of a personal computer.

### DESCRIPTION OF THE PREFERRED EMBODIMENTS

The embodiments of the invention will be described below with reference to the drawings.

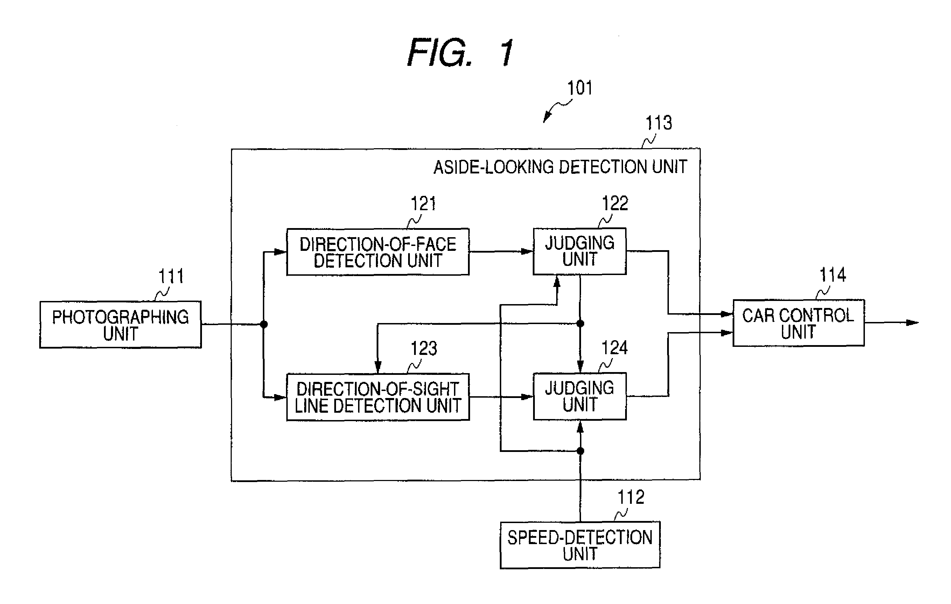

Fig. 1 is a block diagram showing an embodiment of the driving-support apparatus to which the invention is applied. The driving-support apparatus 101 performs a process for detecting the act of looking aside by a driver driving a car (also hereinafter referred to as "automobile") equipped with the driving-support apparatus 101, and controls an onboard device provided on the automobile so that a process to cope with the act of looking aside is performed when the act of looking aside by a driver is detected. The driving-support apparatus 101 includes: a photographing unit 111; a speed-detection unit 112; an aside-looking detection unit 113; and a car control unit 114.

The photographing unit 111 is composed of e.g. a camera, and photographs the face of a driver substantially from the front direction. The photographing unit 111 supplies an image including the photographed driver's face (hereinafter referred to "face image") to a direction-of-face detection unit 121 and a direction-of-sight line detection unit 123 in the aside-looking detection unit 113.

The speed-detection unit 112 is composed of e.g. a speed sensor, and detects the speed of the automobile. The speed-detection unit 112 supplies an information piece showing the detected automobile speed to judging units 122 and 124 in the aside-looking detection unit 113.

The aside-looking detection unit 113 performs a process for detecting the act of looking aside by the driver. The aside-looking detection unit 113 includes the direction-of-face detection unit 121, the judging unit 122, the direction-of-sight line detection unit 123, and the judging unit 124.

The direction-of-face detection unit 121 uses a predetermined technique to detect the face orientation of the driver based on the face image. The direction-of-face detection unit 121 supplies an information piece showing the face orientation of the driver to the judging unit 122. Now, the technique which the direction-of-face detection unit 121 uses to detect the orientation of face is not limited to a particular one. It is preferable to adopt a technique which enables quicker and more reliable detection of the orientation of face.

The judging unit 122 judges based on the face orientation of the driver and the speed of the automobile whether or not the driver is looking aside. The judging unit 122 supplies an information piece showing the result of the judgment to the direction-of-sight line detection unit 123 and the judging unit 124. Further, when having judged the driver is looking aside, the judging unit 122 supplies the car control unit 114 with an information piece showing that the driver is looking aside.

The direction-of-sight line detection unit 123 uses a predetermined technique to detect the sight line orientation of the driver based on the face image. The direction-of-sight line detection unit 123 supplies the judging unit 124 with an information piece showing the sight line orientation of the driver. Now, the technique which the direction-of-sight line detection unit 123 uses to detect the orientation of sight line is not limited to a particular one. It is preferable to adopt a technique which enables quicker and more reliable detection of the orientation of sight line.

When the judging unit 122 has judged based on the face orientation of the driver that the driver is not looking aside, the judging unit 124 judges based on the sight line orientation of the driver whether or not the driver is looking aside. When having judged that the driver is looking aside, the judging unit 124 supplies the car control unit 114 with an information piece showing that the driver is looking aside.

The car control unit 114 is composed of e.g. an ECU (Electronic Control Unit). When the act of looking aside by the driver is detected, the car control unit 114 controls the onboard device provided on the automobile so that a process to cope with the act of looking aside is performed.

The orientations of driver's face and sight line in a horizontal direction will be represented below by angles using the front of the automobile as a reference direction. Specifically, the reference direction is set to zero degree; an angle of a direction on the left of the reference direction is represented by a negative value, and an angle of a direction on the right of the reference direction is represented by a positive value. For instance, the direction at 30 degrees on the left of the reference direction is represented by -30 degrees, and the direction at 30 degrees on the right of the reference direction is represented by +30 degrees.

Likewise, when a certain direction is made a reference one, an angle of a direction on the left of the direction making a reference is represented by a negative value, and an angle of a direction on the right of the direction making the reference is represented by a positive value, below. For instance, when the orientation of driver's face is adopted as a reference, the direction of 30 degrees on the left with respect to the orientation of driver's face is represented by -30 degrees, and the direction of 30 degrees on the right with respect to the reference direction is represented by +30 degrees.

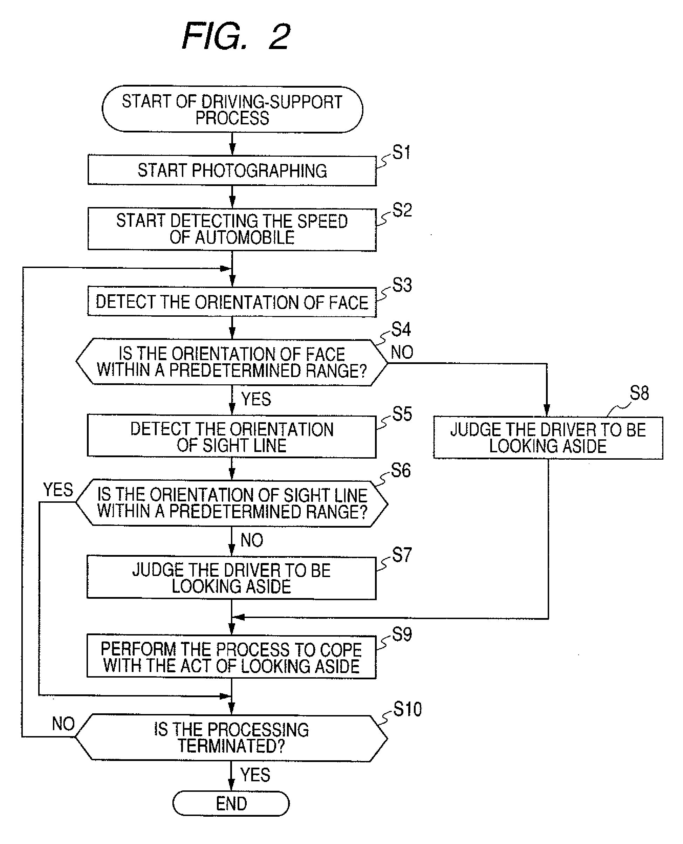

Now, driving-support processing executed by the driving-support apparatus 101 will be described with reference to the flowchart of Fig. 2. Incidentally, the processing is started e.g. when the engine of the automobile is activated.

In Step S1, the photographing unit 111 starts photographing. Specifically, the photographing unit 111 starts to photograph the face of a driver, and starts to supply the photographed face image to the direction-of-face detection unit 121 and the direction-of-sight line detection unit 123.

In Step S2, the speed-detection unit 112 starts to detect the speed of the automobile, and starts to supply the judging units 122 and 124 with an information piece showing the detected speed.

In Step S3, the direction-of-face detection unit 121 detects the orientation of face. Specifically, the direction-of-face detection unit 121 detects the orientation of driver's face based on the face image, and supplies the judging unit 122 with an information piece showing the detected orientation of face.

In Step S4, the judging unit 122 judges whether or not the orientation of face is within a predetermined range (hereinafter referred to as "face orientation-judging range").

Herein, the face orientation-judging range refers to a range of the orientation of face making a reference to judge whether or not the driver is looking aside. When the orientation of driver's face is out of the face orientation-judging range, the judging unit 122 judges that the driver is looking aside.

In *"*DORAIBA HENO KIKEN NINCHI-SIEN-HOUHOU NI KANSURU KENKYU (A Study on Method of Warning Cognition to a Car Driver) by Hajime Takada et al. in Collection No. 4-06 of proceedings of Academic lecture meeting in Japan, Society of Automotive Engineers of Japan, Inc., May 2006, pp. 11-16" (hereinafter referred to as Cited Reference 1) is reported the experimental result that the time required for a driver to recognize the emission light of an LED (Light Emitting Diode) shows no remarkable difference owing to the differences in display position, color and LED diameter when the LED display position is within a range between 20 degrees on the left and 20 degrees on the right with respect to the front direction of the driver, whereas when the display position is beyond the range, it shows a remarkable difference depending on the differences in display position, color and LED diameter.

Further, in *"*DORAIBA NO KAONOMUKI NIYORU ZENPOHUCHUSHI NO SUITEI TO KEIHO-HANNOJIKAN NO KENKYU (Study on Estimation that the Driver's Attention is not in Forward by using Face Orientation and Reaction Time to Warning) by Satoshi Nakagoshi et al. in Collection No. 58-06 of proceedings of Academic lecture meeting in Japan, Society of Automotive Engineers of Japan, Inc., May 2006, pp. 17-20" (hereinafter referred to as Cited Reference 2) is reported the experimental result that when the angle of an object that a driver is looking carefully exceeds 20 degrees on the right and left, the angle of the orientation of face is beyond the angle of the ocular movement, and therefore the driver shows a more remarkable tendency to move his or her face.

For instance, when driver' s face is faced toward the left beyond -20 degrees or toward the right beyond +20 degrees, it is thought based on the experimental results that there is a high probability the driver is not looking in front of the automobile, whose attention to the front of the automobile has been decreased, and a range of -20 to +20 degrees with respect to the reference direction is set as an example of the face orientation-judging range.

In addition, the face orientation-judging range may be adjusted according to the speed of an automobile because driver' s field of view is narrowed with an increase in the speed of an automobile. For instance, the face orientation-judging range may be set to: a range of -50 to +50 degrees with respect to the reference direction when the speed of the automobile is 40 km per hour or below; a range of -32 to +32 degrees with respect to the reference direction in the case of 70 km per hour or below; a range of -20 to +20 degrees with respect to the reference direction in the case of 100 km per hour or below; and a range of -10 to +10 degrees with respect to the reference direction in the case of above 100 km per hour.

When in Step S4 the orientation of face is judged to be within the face orientation-judging range, the processing proceeds to Step S5.

In Step S5, the direction-of-sight line detection unit 123 detects the orientation of sight line. Specifically, the direction-of-sight line detection unit 123 detects the orientation of driver's sight line based on the face image, and supplies the judging unit 124 with an information piece showing the detected orientation of sight line.

In Step S6, the judging unit 124 judges whether or not the orientation of sight line is within a predetermined range (hereinafter referred to as "sight line direction-judging range").

Herein, the sight line direction-judging range refers to a range of the orientation of sight line making a reference to judge whether or not the driver is looking aside. When the orientation of driver's sight line is out of the sight line direction-judging range, the judging unit 124 judges that the driver is looking aside.

For instance, it is conceivable that a range of -20 to +20 degrees with respect to the reference direction is set, as an example of the sight line direction-judging range, based on the experimental results shown in Cited References 1 and 2, as in the case of the face orientation-judging range.

Further, since driver's field of view is narrowed with an increase in the speed of an automobile, and is widened with a decrease in the speed of an automobile as stated above, the sight line direction-judging range may be adjusted according to the speed of an automobile as in the case of the face orientation-judging range.

When in Step S6, the orientation of sight line is judged to be out of the sight line direction-judging range, the processing proceeds to Step S7.

In Step S7, the judging unit 124 judges the driver is looking aside. The judging unit 124 supplies the car control unit 114 with an information piece showing that the driver is looking aside. Then, the processing proceeds to Step S9.

On the other hand, when it is judged in Step S4 that the orientation of face is out of the face orientation-judging range, the processing proceeds to Step S8.

In Step S8, the judging unit 122 judges that the driver is looking aside. That is, regardless of the orientation of sight line, the driver is judged to be looking aside based on only the orientation of face in this case. The judging unit 122 supplies the car control unit 114 with an information piece showing that the driver is looking aside.

In Step S9, the car control unit 114 performs a process to cope with the act of looking aside. For instance, when the driver continues looking aside over or beyond a predetermined time, the car control unit 114 makes a display device provided on the automobile display a warning picture for urging the driver to stop looking aside, or makes a speaker provided on the automobile output a warning for urging the driver to stop looking aside.

On the other hand, when the orientation of sight line is judged to be within the sight line direction-judging range in Step S6, namely when it is judged based on both the driver's face and sight line that the driver is not looking aside, the processing proceeds to Step S10.

In Step S10, the driving-support apparatus 101 judges whether or not to terminate the processing. When it is judged that the processing should not be terminated, the processing is returned back to Step S3, and the processes of Step S3 to S10 are executed repeatedly unless it is judged in Step S10 that the processing should be terminated.

However, for instance, when the engine of the automobile is stopped, in Step S10 the driving-support apparatus 101 judges that the processing should be terminated, and the driving-support processing is terminated.

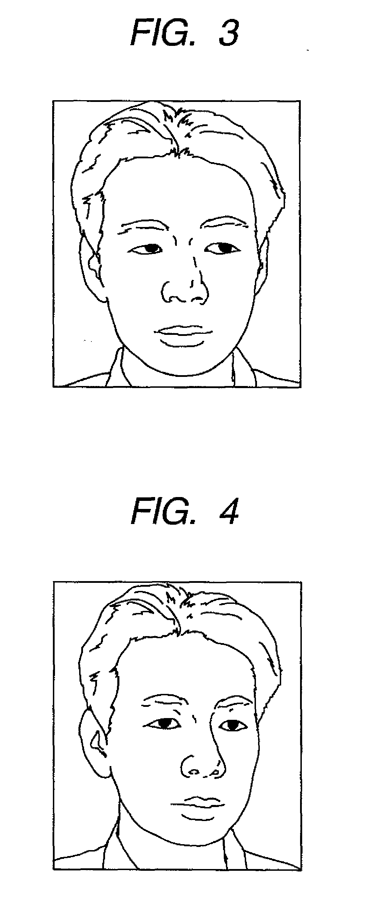

As stated above, an arrangement is made to detect the act of looking aside based on both the orientation of face and the orientation of sight line, whereby the act of looking aside can be detected with reliability even when the face is faced substantially straight ahead, however the sight line is not faced to the front as shown in Fig. 3, for example. In contrast, when the face is not faced straight ahead, however the sight line is faced to the front, it can be prevented to detect in error that the driver is looking aside.

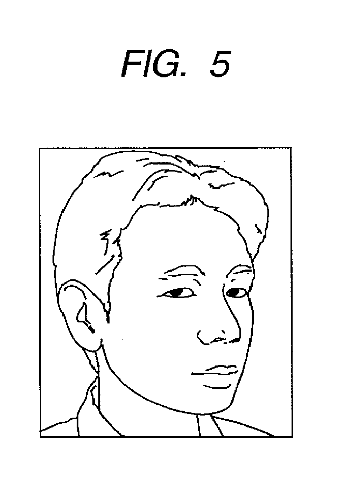

Figs. 4 and 5 show examples of driver' s condition in the case where the orientation of sight line is common to them, however the orientation of face differs. Specifically, in Fig. 4 the orientation of driver's face is -10 degrees and the orientation of sight line is -20 degrees; in Fig. 5 the orientation of driver' s face is -30 degrees and the orientation of sight line is -20 degrees. Even when the orientation of sight line is the same, the closer to the front the orientation of face is, the more easily the driver can look to the front, as shown in Fig. 4, and the further the orientation of face is deviated from the front, the more difficult it becomes to look to the front as shown in Fig 5. As stated above, the driver is judged to be looking aside regardless of the orientation of sight line when the orientation of face is out of the face orientation-judging range, whereby the following are made possible even when the orientation of sight line is common: to judge the driver not to be looking aside in the case where the orientation of face is close to the front; and to judge the driver to be looking aside in the case where the orientation of face is deviated from the front.

That is, the act of looking aside can be detected more accurately.

Further, in the embodiment of the invention, a related-art technique can be used as the technique to detect the orientation of face and the orientation of sight line, and the needs for additionally performing a complicated process is eliminated. Therefore, the accuracy of detecting the act of looking aside can be increased readily.

In the above description, the example of detecting the act of looking aside by the driver driving a car is shown. However, in addition to the above-described example, the invention is also applicable to e.g. detection of the act of looking aside by persons who need to carefully look to a predetermined direction, such as persons driving or operating various types of vehicles e.g. electric railcars, aircrafts and watercraft, persons operating machines including a working machine.

When judging whether or not the driver is looking aside, the time during which the face is faced to outside the face orientation-judging range, or the time during which the sight line is faced to outside the sight line direction-judging range may be considered. In that case, the time used for the judgment may be adjusted according to e.g. the speed of the automobile or the orientation of the face or sight line.

Further, in the embodiment of the invention, the technique to detect the orientations of face and sight line are not limited to the one which uses an image, and it may be the one which uses e. g. a sensor attached to the head of a driver to detect the orientations.

The above-described processes in a series may be executed by software as well as hardware. In the case of executing the series of processes by software, a program constituting the software is installed from a medium with the program recorded thereon to a computer incorporated in a dedicated piece of hardware, or a multipurpose personal computer, which can execute various kinds of functions when various kinds of programs are installed thereto, for example.

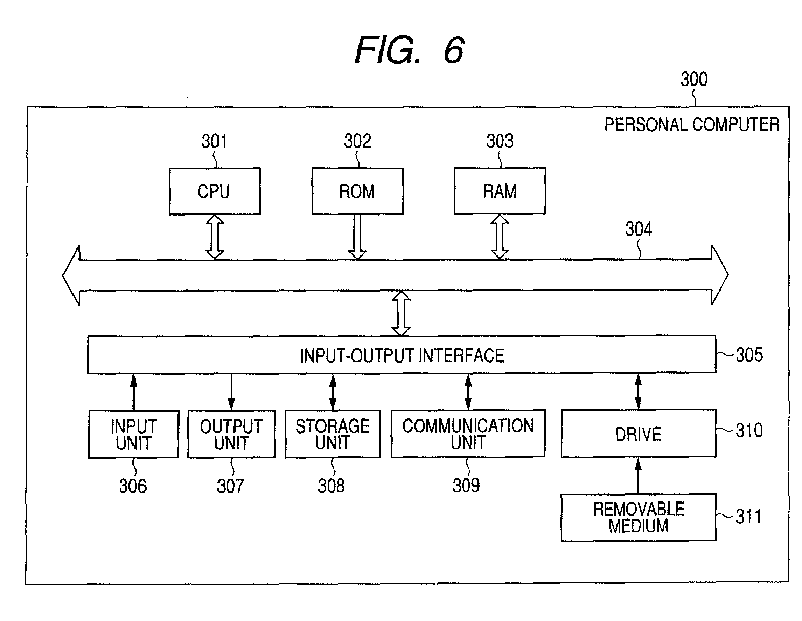

Fig. 6 is a block diagram showing an example of the hardware configuration of a computer which executes the series of processes as described above according to the program.

In the computer, a CPU (Central Processing Unit) 301, a ROM (Read Only Memory) 302, and a RAM (Random Access Memory) 303 are connected through a bus 304 mutually.

To the bus 304, an input-output interface 305 is connected. To the input-output interface 305 are connected: an input unit 306 composed of a keyboard, a mouse, a microphone, etc. ; an output unit 307 composed of a display, a speaker, etc. ; a storage unit 308 composed of a hard disc, a nonvolatile memory, etc. ; a communication unit 309 composed of a network interface, etc.; and a drive 310 for driving a removable medium 311 such as a magnetic disc, an optical disc, a magneto-optical disc or a semiconductor memory, etc.

In a computer configured as described above, the CPU 301 loads the program stored in e.g. the storage unit 308 into the RAM 303 through the input-output interface 305 and the bus 304 and runs the program, whereby the series of processes as described above is performed.

The program which the computer (CPU 301) runs is recorded on and offered by the removable medium 311, which is a package medium composed of e.g. a magnetic disc (including a flexible disc), an optical disc (CD-ROM (Compact Disc-Read Only Memory), DVD(Digital Versatile Disc), etc.), a magneto-optical disc, or a semiconductor memory, etc. otherwise offered through a wired or wireless transmission medium such as a local area network, the Internet or digital satellite broadcasting.

The program can be installed to the storage unit 308 through the input-output interface 305 by setting the removable medium 311 in the drive 310. Also, the program can be received with the communication unit 309 through a wired or wireless transmission medium, and installed to the storage unit 308. Otherwise, the program may be previously installed to the ROM 302 or the storage unit 308.

The program which the computer runs may be a program that processes thereof are performed in time sequence following the order described herein, or a program that the processes are performed in parallel or at a required time such as the time when a call is made.

Further, the embodiment of the invention is not limited to the above-described ones, and various changes may be made without departing from the substance of the invention.

## Claims

1. An apparatus for detecting an act of looking aside comprising:
a face orientation detection means for detecting an orientation of face of a person;
a first judging means for judging, based on the face orientation of the person, whether or not the person is looking aside;
a direction-of-sight line detection means for detecting an orientation of sight line of the person; and
a second judging means for judging, based on the sight line orientation of the person, whether or not the person is looking aside when it is judged based on the face orientation of the person that the person is not looking aside.

2. The apparatus for detecting an act of looking aside of Claim 1, wherein the first judging means adjusts, according to a speed of a vehicle which the person is driving, a range of the face orientation making a reference to judge whether or not the act of looking aside is going on.

3. The apparatus for detecting an act of looking aside of Claim 1, wherein the second judging means adjusts, according to a speed of a vehicle which the person is driving, a range of the sight line orientation making a reference to judge whether or not the act of looking aside is going on.

4. A method for detecting an act of looking aside, comprising:
a face orientation detection step for detecting an orientation of face of a person;
a first judging step for judging, based on the face orientation of the person, whether or not the person is looking aside;
a direction-of-sight line detection step for detecting an orientation of sight line of the person; and
a second judging step for judging, based on the sight line orientation of the person, whether or not the person is looking aside when it is judged based on the face orientation of the person that the person is not looking aside.

5. A program for making a computer execute a processing comprising:
a face orientation detection step for detecting an orientation of face of a person;
a first judging step for judging, based on the face orientation of the person, whether or not the person is looking aside;
a direction-of-sight line detection step for detecting an orientation of sight line of the person; and
a second judging step for judging, based on the sight line orientation of the person, whether or not the person is looking aside when it is judged based on the face orientation of the person that the person is not looking aside.
